(19) **Europäisches Patentamt / European Patent Office / Office européen des brevets**

(11)  **EP 3 368 789 B1**

(12)  **FASCICULE DE BREVET EUROPEEN**

(45) Date de publication et mention
de la délivrance du brevet:
**02.06.2021  Bulletin 2021/22**

(51) Int Cl.:
***F16F 15/14*** *(2006.01)*       ***F16F 15/133*** *(2006.01)*

(21) Numéro de dépôt: **16790944.9**

(86) Numéro de dépôt international:
**PCT/EP2016/076163**

(22) Date de dépôt: **28.10.2016**

(87) Numéro de publication internationale:
**WO 2017/072337 (04.05.2017 Gazette 2017/18)**

(54) **ABSORBEUR DE VIBRATION, MECANISME D'AMORTISSEMENT ET ENSEMBLE DE PROPULSION ASSOCIES**

SCHWINGUNGSDÄMPFER, ZUGEHÖRIGER DÄMPFUNGSMECHANISMUS UND ANTRIEBSANORDNUNG

VIBRATION DAMPER, ASSOCIATED DAMPING MECHANISM AND PROPULSION ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **30.10.2015  FR 1560421**

(43) Date de publication de la demande:
**05.09.2018  Bulletin 2018/36**

(73) Titulaire: **Valeo Embrayages**
**80009 Amiens Cedex 2 (FR)**

(72) Inventeurs:
 • **FLECHE, Benoit**
  **80009 Amiens (FR)**
 • **BOULET, Jérôme**
  **80009 Amiens (FR)**

 • **LEBEAU, Fabien**
  **80009 Amiens (FR)**
 • **LOPEZ PEREZ, Carlos**
  **28947 Fuenlabrada (ES)**

(74) Mandataire: **Cardon, Nicolas**
 **Valeo Embrayages**
 **Sce Propriété Intellectuelle**
 **Immeuble le Delta**
 **14, avenue des Béguines**
 **95892 Cergy Pontoise Cedex (FR)**

(56) Documents cités:
 **EP-A1- 2 824 361       EP-A1- 2 899 426**
 **WO-A1-2014/128380    DE-A1-102010 049 929**
 **DE-A1-102010 054 303**

## Description

### DOMAINE TECHNIQUE DE L'INVENTION

L'invention se rapporte à la filtration des acyclismes d'un moteur à combustion interne, notamment pour une application à un véhicule automobile, et notamment à un absorbeur de vibration de type batteur inertiel, plus particulièrement destiné à s'interposer entre un moteur à combustion interne et une boîte de transmission, et pouvant par exemple être intégré à un convertisseur de couple ou à un mécanisme d'embrayage sec ou à friction ou humide. Elle a également trait à un ensemble de propulsion et un mécanisme d'amortissement incorporant un tel absorbeur de vibration.

Dans le cadre de la présente demande, on désigne par absorbeur de vibration de type batteur un mécanisme de filtration agencé pour être raccordé à une chaîne de transmission uniquement par l'intermédiaire de l'organe à amortir ou entraîné en rotation uniquement par l'intermédiaire de l'organe à amortir. En pratique, un tel amortisseur peut comporter une ou plusieurs masses oscillantes "folles" reliées à un organe à amortir par un ou plusieurs éléments élastiques de raideur constante ou variable, la ou les masses oscillantes n'ayant pas vocation à être reliées à d'autres éléments que l'organe à amortir.

### ETAT DE LA TECHNIQUE ANTERIEURE

Afin d'atténuer les irrégularités de rotation d'un vilebrequin de moteur à combustion interne, principalement à des vitesses entre la vitesse de ralenti et une vitesse de régime intermédiaire, par exemple environ 2500 tours/min, il a été proposé dans le document FR2857073 d'accoupler directement au vilebrequin d'un moteur à combustion interne un volant d'inertie atténuateur de vibrations de torsion ou de fluctuations de vitesse de révolution, constitué d'une première masse d'inertie solidaire en rotation du vilebrequin et comportant une couronne de démarreur et un plateau de réaction d'un embrayage à friction, et d'une deuxième masse d'inertie mobile en rotation par rapport à la première, grâce à quatre modules de liaison articulés comportant chacun au moins un bras oscillant pivotant par rapport à la première masse d'inertie autour d'un axe parallèle à l'axe de révolution, une masse oscillante positionnée à une extrémité libre du bras oscillant de manière à être mobile dans une direction essentiellement radiale, et une bielle reliant un point intermédiaire du bras oscillant à la deuxième masse d'inertie. Par effet centrifuge, les modules articulés s'opposent à la rotation relative des masses d'inertie en exerçant un couple de rappel sensiblement proportionnel à la rotation relative des deux masses d'inertie et au carré de la vitesse de révolution de la masse d'inertie liée au vilebrequin.

La loi de comportement de ce volant d'inertie permet d'obtenir un filtrage particulièrement optimisé pour un régime de vitesse de révolution, et dont l'effet reste bénéfique bien que non optimal sur une plage de valeurs de vitesse de révolution autour du régime optimisé. Mais la structure du mécanisme est complexe, avec plusieurs modules nécessitant chacun trois pivots soumis aux forces centrifuges et plusieurs pièces mobiles. Il est nécessaire de prévoir un blocage des modules de liaison lorsque la vitesse de révolution dépasse la vitesse de régime intermédiaire, pour éviter que les pivots soient sollicités au-delà de leurs limites de résistance mécanique. Ce blocage est obtenu par des blocs de matériau élastomère, interposés entre les masses oscillantes et la deuxième masse d'inertie, et venant en contact avec la deuxième masse d'inertie lorsque la vitesse de révolution dépasse la vitesse de régime intermédiaire. Ces blocs d'élastomère renchérissent le mécanisme et peuvent vieillir prématurément. Par ailleurs, le mécanisme est bruyant dans les phases transitoires de ralentissement, lorsque la vitesse de révolution n'est plus suffisante

Le document DE 10 2010 049929 décrit un embrayage à friction équipé d'un disque d'embrayage (1, 1a) et d'une unité de friction présentant un couple de friction dépendant de l'angle de torsion relatif entre une masse d'amortissement et une masse à amortir.

### EXPOSE DE L'INVENTION

L'invention vise à remédier aux inconvénients de l'état de la technique et à proposer une simplification des moyens pour filtrer les acyclismes d'un moteur à combustion interne sur une plage de valeurs de vitesse de révolution autour du régime optimisé.

Pour ce faire est proposé, selon un premier aspect de l'invention, un absorbeur de vibration, de type batteur inertiel, comportant:

- deux organes tournants guidés en rotation autour d'un axe de révolution, l'un des deux organes tournants étant un volant d'inertie oscillant autour de l'axe de révolution et l'autre des deux organes tournants étant un organe à amortir, l'organe à amortir étant agencé pour être entraîné par un couple empruntant un chemin de couple entre un organe menant et un organe mené, le volant d'inertie étant agencé pour être relié cinématiquement au chemin de couple entre l'organe menant et l'organe mené uniquement par l'intermédiaire de l'organe à amortir; et

- un ou plusieurs modules de liaison entre les deux organes tournants, permettant un débattement angulaire relatif θ entre les deux organes tournants autour de l'axe de révolution de part et d'autre d'une position angulaire relative de référence,

Selon l'invention, chaque module de liaison comporte:

- un galet associé à un premier des deux organes tournants et

- un chemin de came relié élastiquement par un élément élastique à un deuxième des deux organes tournants, l'élément élastique étant apte à se déformer pour assurer un appui élastique du chemin de came contre le galet permettant au galet de rouler sur le chemin de came lorsque les deux organes tournants tournent l'un par rapport à l'autre de part et d'autre de la position de référence.

La mise en œuvre d'un chemin de came permet de faire évoluer les possibilités d'amortissement de l'absorbeur de vibrations en modifiant le profil de ce chemin. Le choix d'une liaison par roulement entre un galet et un chemin de came permet par ailleurs de minimiser les frottements. Par construction, l'élément élastique maintient un contact entre le galet et le chemin de came dans tous les régimes de fonctionnement, donc également à l'arrêt, ce qui élimine les bruits subits avec les mécanismes de l'état de la technique antérieur.

De préférence, l'élément élastique est agencé de sorte que la raideur de l'élément élastique augmente lorsque la vitesse de rotation de l'absorbeur de vibration augmente. Ceci permet d'étendre la plage de fréquence dans laquelle l'absorbeur de vibration est efficace.

Suivant un mode de réalisation particulièrement avantageux, l'absorbeur de vibration comporte une lame élastique constituant l'élément élastique et comportant :

- une portion de fixation fixée au deuxième des deux organes tournants, et

- une portion flexible apte à fléchir pour assurer un appui élastique du chemin de came contre le galet permettant au galet de rouler sur le chemin de came lorsque les deux organes tournants tournent l'un par rapport à l'autre de part et d'autre de la position de référence.

Ainsi, la structure des modules de liaison est particulièrement simple et minimise le nombre de pièces mobiles. L'encombrement axial utilisé par la lame est faible. Avantageusement, le chemin de came est agencé sur la portion flexible. De préférence, la portion flexible comporte une portion intermédiaire de déformation, reliant la portion de fixation au chemin de came. La portion intermédiaire de déformation permet d'absorber les contraintes de flexion de la lame.

Suivant un mode de réalisation la portion intermédiaire de déformation est conformée en U dans un plan perpendiculaire à l'axe de révolution. Cette configuration permet de tirer parti du volume disponible autour de l'axe de révolution, de manière à maximiser l'amplitude du déplacement radial du ou des modules de liaison.

Suivant un autre mode de réalisation la portion flexible est recourbée circonférentiellement autour de l'axe de rotation s'étendant jusqu'à une extrémité libre agencée pour se déplacer avec une composante radiale lorsque les deux organes tournants tournent l'un par rapport à l'autre. Cette configuration permet de réaliser une portion flexible de grande dimension, autorisant des débattements importants, et qui permet de combiner un effet de rappel élastique des organes tournants vers la position de référence et un effet d'inertie car l'extrémité libre de la lame élastique en rotation autour de l'axe de révolution tend à se déporter radialement vers l'extérieur sous l'effet de la force centrifuge.

Suivant un mode de réalisation préféré, le chemin de came est tourné radialement vers l'extérieur et vers le galet. La lame élastique combine un effet de rappel élastique des organes tournants vers la position de référence et un effet d'inertie, car la lame élastique en rotation autour de l'axe de révolution se déforme sous l'effet de la force centrifuge. La lame élastique étant retenue par le galet agencé radialement à l'extérieur de la lame, la rotation génère au niveau des modules de liaison un couple de rappel sensiblement proportionnel au carré de la vitesse de révolution et au débattement angulaire entre les deux organes tournants.

La lame élastique est préférentiellement agencée de sorte que, à vitesse nulle, l'ouverture angulaire séparant la position angulaire relative de référence de l'extrémité libre soit supérieure à 30°, de préférence supérieure à 45°, par exemple supérieure à 60°. Avec un tel positionnement de l'extrémité libre de la lame relativement éloigné de la position angulaire relative de référence, on amplifie l'effet de la force centrifuge sur les variations de raideur des modules de liaison.

De façon plus générale, et suivant un mode de réalisation particulièrement avantageux, l'élément élastique est agencé de manière à permettre un déplacement du chemin de came ayant une composante radiale lorsque les deux organes tournants tournent l'un par rapport à l'autre. En imposant un déplacement radial du chemin de came, on modifie le moment d'inertie du module de liaison par rapport à l'axe de révolution, et donc la réponse de l'absorbeur de vibration, en fonction de la vitesse de révolution, en combinant un effet de rappel élastique et un effet inertiel.

Suivant un mode de réalisation préféré, le galet est un galet pivotant autour d'un axe de rotation fixe par rapport au premier organe tournant.

On peut prévoir qu'une butée limite le débattement angulaire entre les deux organes tournants.

De préférence, le ou les modules de liaison comportent au moins deux modules de liaison, de préférence identiques, et de préférence disposés de façon symétrique par rapport à l'axe de révolution. La symétrie permet un équilibrage des masses tournantes. On peut prévoir un nombre de modules de liaison supérieur à deux, par exemple trois modules de liaison disposés à 120° ou quatre modules de liaison disposés à 90°.

De préférence, dans la position relative de référence, le galet est en appui contre une zone du chemin de came orthoradiale par rapport à l'axe de référence. Dans la position de référence, le couple de rappel est donc nul, car les efforts transmis entre le chemin de came et le galet sont purement radiaux. La position de référence est une position d'équilibre stable du mécanisme, et ceci pour toutes les vitesses de rotation.

De préférence, le volant d'inertie oscillant est guidé en rotation autour d'un moyeu formé sur l'organe à amortir, en particulier par l'intermédiaire d'un palier, par exemple un palier lisse.

L'absorbeur de vibration est destiné à être raccordé à une chaîne de transmission, notamment de véhicule automobile, et l'absorbeur de vibration est agencé pour se raccorder à cette chaîne de transmission uniquement par l'intermédiaire de l'élément à amortir. En d'autres termes, le volant d'inertie oscillant a vocation à osciller librement uniquement sous l'effet de sa masse et du guidage réalisé par le ou les modules de liaison, ceci dans tous les états de la chaîne de transmission.

De préférence, l'organe à amortir est agencé pour être entraîné par un couple moteur et pour transmettre le couple moteur d'un organe menant à un organe mené, le volant d'inertie oscillant étant agencé pour être disposé en dérivation par rapport au chemin emprunté par le couple moteur entre l'organe menant et l'organe mené.

En pratique, l'organe à amortir est pourvu de moyens de liaison mécanique à l'organe menant et/ou à l'organe mené, le volant d'inertie oscillant étant dépourvu de moyens de liaison mécanique à l'organe menant et de moyens de liaison mécanique à l'organe mené. La liaison mécanique peut être constituée par des moyens de fixation en rotation et en translation (par exemple des trous de passage de tiges de fixation) ou en rotation uniquement (par exemple une cavité cannelée) et/ou par des moyens élastiques, notamment par des ressorts reliant l'organe à amortir à l'organe menant et/ou à l'organe mené. De préférence, l'absorbeur de vibration est dépourvu de moyens d'amortissement par friction dissipant de l'énergie lorsque les deux organes tournants tournent l'un par rapport à l'autre de part et d'autre de la position de référence. En effet, l'absorbeur de vibration n'a pas vocation à avoir une fonction d'amortisseur dissipant de l'énergie.

Suivant un mode de réalisation, le ou les modules de liaison sont tels que lorsque l'organe à amortir tourne à une vitesse de révolution $\omega$, le ou les modules de liaison génèrent ensemble entre les deux organes tournants un couple résultant $\Gamma_R$ de rappel vers la position de référence, fonction du débattement angulaire $\theta$ entre les deux organes tournants et de la vitesse de révolution $\omega$, et tel que:

$$\frac{3}{4} C \leq \left| \frac{\Gamma_R}{\theta \cdot \omega^2} \right| \leq \frac{5}{4} C$$

où C est une constante positive donnée, lorsque la vitesse de révolution $\omega$ varie dans une plage de vitesses entre une valeur minimale $\omega$min prédéterminée inférieure à 1000 tr/min et une valeur maximale prédéterminée $\omega$max supérieure à 1500 tr/min.

En combinant ainsi un effet de rappel élastique et un effet de rappel par inertie, dans des proportions judicieusement choisies, on obtient un couple de rappel sensiblement proportionnel au carré de la vitesse de révolution et au débattement angulaire entre les deux organes tournants, ce qui revient à dire que le ou les modules de liaison génèrent entre les deux organes tournants une raideur apparente sensiblement proportionnelle au carré de la vitesse de révolution. On peut en effet définir une raideur apparente K de l'absorbeur de vibration, égale au quotient du couple résultant $\Gamma_R$ par le débattement angulaire $\theta$ correspondant, cette raideur K étant telle que:

$$\frac{3}{4} C \omega^2 \leq K \leq \frac{5}{4} C \omega^2$$

De préférence, le ou les modules de liaison sont conformés de manière à ce que le couple résultant $\Gamma_R$ de rappel vers la position de référence, soit tel que, pour au moins une vitesse de révolution prédéterminée $\omega_0$ inférieure à 1000 tr/min et au moins un nombre entier N égal à 1, 2, 3, 4 ou 6, et en notant I le moment d'inertie du volant d'inertie oscillant autour de l'axe de révolution, on observe:

$$\frac{9}{10} \frac{\omega_0}{2} N \leq \frac{1}{2\pi} \sqrt{\left| \frac{\Gamma_R}{\theta \cdot \omega^2 \cdot I} \right|} \leq \frac{11}{10} \frac{\omega_0}{2} N$$

De préférence:

$$\frac{1}{2\pi} \sqrt{\left| \frac{\Gamma_R}{\theta \cdot \omega^2 \cdot I} \right|} = \frac{\omega_0}{2} N$$

On sait que l'harmonique principale d'acyclisme d'un moteur dépend du type de moteur et notamment du nombre de cylindres. Ainsi, pour un moteur à quatre temps, donc à une combustion par cylindre tous les deux tours de vilebrequin, la fréquence principale d'acyclisme $F_M$ correspond généralement à la fréquence de combustion des cylindres soit, pour un moteur à N cylindres et pour une vitesse de révolution $\omega$ du vilebrequin donnée :

$$F_M = \frac{\omega}{2} N$$

En accordant la fréquence de résonance d'oscillation de l'absorbeur de vibration sur la fréquence principale d'acyclisme $F_M(\omega)$ du moteur, pour une plage de vitesses de révolution, on permet à l'absorbeur de vibration de battre en opposition de phase par rapport aux acyclismes, d'où une atténuation importante du niveau vibratoire. L'organe tournant relié au vilebrequin est ainsi sollicité par des couples antagonistes en opposition de phase qui se compensent au moins partiellement, à savoir d'une part un couple acyclique d'entrée, en provenance du vilebrequin, et d'autre part un couple oscillant transmis par les modules de liaison.

Pour obtenir l'accord souhaité entre la fréquence de résonance d'oscillation de l'absorbeur de vibration et la fréquence principale d'acyclisme, on met à profit la possibilité qu'offre le module de liaison à roulement selon l'invention de faire varier, avec le profil des chemins de came, la loi reliant le débattement angulaire entre les deux organes tournants au couple transmis.

Suivant un autre aspect de l'invention, celle-ci a trait à un mécanisme d'amortissement comportant un organe d'entrée et un organe de sortie reliés par une chaîne cinématique de transmission de couple, et un absorbeur de vibration tel que décrit précédemment, l'organe à amortir étant constitué par l'organe d'entrée, l'organe de sortie ou un élément de la chaîne cinématique de transmission entre l'organe d'entrée et l'organe de sortie, le volant oscillant étant disposé en dérivation par rapport à la chaîne cinématique de transmission de couple. En particulier, cet aspect de l'invention a trait à un mécanisme d'amortissement comportant un organe d'entrée et un organe de sortie reliés par une chaîne cinématique de transmission de couple, et un absorbeur de vibration tel que décrit précédemment, l'organe à amortir étant constitué par l'organe d'entrée, l'organe de sortie ou un élément de la chaîne cinématique de transmission entre l'organe d'entrée et l'organe de sortie, le volant oscillant étant disposé en dérivation par rapport à la chaîne cinématique de transmission de couple.

De préférence, le volant d'inertie oscillant est guidé en rotation autour d'un moyeu formé sur l'organe à amortir par l'intermédiaire d'un palier en recouvrement axial par rapport au palier assurant le guidage en rotation du volant secondaire par rapport au volant primaire. Ainsi, l'architecture du mécanisme d'amortissement est optimisée pour que l'encombrement axial du mécanisme d'amortissement soit réduit. Pour ce faire, le volant d'inertie secondaire comporte avantageusement un moyeu dont le diamètre intérieur est monté autour du palier assurant le guidage en rotation du volant secondaire par rapport au volant primaire et dont le diamètre extérieur supporte le palier du volant d'inertie oscillant.

Suivant un autre aspect de l'invention, celle-ci a trait à un ensemble de propulsion comportant un organe menant tournant autour d'un axe de révolution, un organe mené relié à l'organe menant par un chemin de couple, et un absorbeur de vibration tel que décrit précédemment, l'organe à amortir étant sur le chemin de couple et le volant d'inertie oscillant étant en dérivation du chemin de couple.

Notamment, elle a trait à un ensemble de propulsion comportant un moteur à combustion interne comportant un vilebrequin tournant autour d'un axe de révolution, et un absorbeur de vibration tel que décrit précédemment, l'organe à amortir étant entraîné par le vilebrequin.

De manière particulièrement avantageuse, le moteur à combustion interne est à quatre temps et à N cylindres, le ou les modules de liaison étant conformés de manière à générer ensemble entre les deux organes tournants un couple résultant $\Gamma_R$ de rappel vers la position de référence, fonction du débattement angulaire $\theta$ entre les deux organes tournants et de la vitesse de révolution $\omega$, et tel que, pour au moins une vitesse de révolution prédéterminée $\omega_0$ inférieure à 1000 tr/min et au moins un nombre entier N égal à 1, 2,3, 4, 5, 6, 7 ou 8, on observe :

$$\frac{9}{10}\frac{\omega_0}{2}N \le \frac{1}{2\pi}\sqrt{\left|\frac{\Gamma_R}{\theta \cdot \omega^2 \cdot I}\right|} \le \frac{11}{10}\frac{\omega_0}{2}N$$

Le mécanisme ainsi défini est donc particulièrement adapté à la filtration de la fréquence $\omega_0/2N$, qui correspond typiquement à la fréquence d'acyclisme d'un moteur à quatre temps N cylindres tournant à la vitesse $\omega_0$. De préférence :

$$\frac{1}{2\pi}\sqrt{\left|\frac{\Gamma_R}{\theta \cdot \omega^2 \cdot I}\right|} = \frac{\omega_0}{2}N$$

De préférence, l'ensemble de propulsion comporte en outre une boîte de transmission, et l'organe à amortir est disposé en série entre le vilebrequin et la boîte de transmission, le volant d'inertie oscillant n'étant lié cinématiquement qu'à l'organe à amortir.

Suivant un mode de réalisation particulièrement avantageux, l'organe à amortir est un volant secondaire d'un double volant amortisseur ou d'un amortisseur à longue course, ou une rondelle de phasage d'un amortisseur à longue course.

Selon un mode de réalisation, le volant d'inertie comporte une tôle annulaire et une couronne d'inertie fixée radialement à l'extérieur de cette tôle annulaire.

Selon un mode de réalisation, les lames élastiques et la tôle annulaire du volant d'inertie sont formées d'une seule pièce.

Selon un mode de réalisation, chaque lame est formée au moyen d'une découpe réalisée dans la tôle annulaire. Chaque découpe permet d'obtenir le contour extérieur de chaque portion flexible, chaque lame étant reliée à la tôle annulaire par l'intermédiaire d'une embase.

Selon un mode de réalisation, chaque embase est emboutie de manière à ce que chaque lame soit déportée axialement par rapport à la tôle annulaire du volant d'inertie.

Selon un autre mode de réalisation, les lames sont aptes à fléchir dans le même plan que le plan dans lequel est disposée la tôle annulaire. Une échancrure agencée radialement à l'extérieur de la portion flexible de chaque lame autorise le déplacement d'un galet sur le chemin de came de chaque lame. De même, une autre échancrure agencée radialement à l'intérieur de la portion flexible de chaque lame autorise un débattement radial de la lame en direction de l'axe lorsque le galet de came se déplace sur le chemin de came.

L'invention porte aussi sur convertisseur de couple comportant un absorbeur de vibration tel que décrit précédemment.

L'invention porte aussi sur un convertisseur de couple comprenant un absorbeur de vibration de type batteur inertiel, l'absorbeur de vibration comportant :

- deux organes tournants guidés en rotation autour d'un axe de révolution, l'un des deux organes tournants étant un volant d'inertie oscillant autour de l'axe de révolution et l'autre des deux organes tournants étant un organe à amortir, l'organe à amortir étant agencé pour être entraîné par un couple empruntant un chemin de couple entre un organe menant et un organe mené, le volant d'inertie étant agencé pour être relié cinématiquement au chemin de couple entre l'organe menant et l'organe mené uniquement par l'intermédiaire de l'organe à amortir ; et

- un ou plusieurs modules de liaison entre les deux organes tournants, permettant un débattement angulaire relatif θ entre les deux organes tournants autour de l'axe de révolution de part et d'autre d'une position angulaire relative de référence,

chaque module de liaison comporte :

- un suiveur de came associé à un premier des deux organes tournants et

- un chemin de came relié élastiquement par un élément élastique à un deuxième des deux organes tournants, l'élément élastique étant apte à se déformer pour assurer un appui élastique du chemin de came contre le suiveur de came permettant au suiveur de came de se déplacer sur le chemin de came lorsque les deux organes tournants tournent l'un par rapport à l'autre de part et d'autre de la position de référence.

Selon un mode de réalisation, le convertisseur de couple comporte des ressorts agencés entre un organe d'entrée et un organe de sortie, l'organe à amortir étant l'organe d'entrée.

Selon un autre mode de réalisation, le convertisseur de couple comporte des ressorts agencés entre un organe d'entrée et un organe de sortie, l'organe à amortir étant l'organe de sortie.

Selon un mode de réalisation, le suiveur de came est un galet monté mobile en rotation pour rouler sur le chemin de came. Dans une variante, le suiveur de came est un galet agencé entre le chemin de came et le premier organe tournant pour rouler à la fois sur le chemin de came et le premier organe tournant lorsque les deux organes tournant tournent l'un par rapport à l'autre.

Selon un mode de réalisation, le suiveur de came est formé par un bossage, formé sur le premier organe tournant, agencé pour se déplacer sur le chemin de came.

Selon un mode de réalisation, l'organe à amortir comporte un élément de support en tôle sur lequel sont montés les galets, les lames étant montées sur le volant d'inertie.

Selon un autre mode de réalisation, l'organe à amortir comporte un élément de support en tôle sur lequel sont montées les lames, les galets étant montés sur le volant d'inertie.

Selon un mode de réalisation, l'absorbeur de vibration comporte une zone de centrage circulaire autour de l'axe de rotation qui assure un centrage du volant d'inertie sur la tôle de support.

Selon un mode de réalisation, le bord radialement externe de la tôle de support est replié pour former une surface de coopération avec le volant d'inertie.

Selon un mode de réalisation, le bord radialement externe de la tôle de support forme une chicane formant d'une part une surface de frottement cylindrique et d'autre part un élément de retenue axiale.

En pratique, l'ensemble de propulsion peut comporter en outre une boîte de transmission. L'organe oscillant est alors avantageusement disposé en dérivation par rapport à la chaîne de transmission reliant le vilebrequin et la boîte de transmission. En d'autres termes, l'organe tournant constituant l'organe à amortir est agencé pour être entraîné par un couple moteur et pour transmettre un couple moteur d'un organe menant à un organe mené. L'autre des organes tournants, qui constitue le volant d'inertie oscillant, est agencé en dérivation par rapport au chemin emprunté par le couple moteur.

**BREVE DESCRIPTION DES FIGURES**

D'autres caractéristiques et avantages de l'invention ressortiront à la lecture de la description qui suit, en référence aux figures annexées, qui illustrent :

- la figure 1, une vue schématique d'un ensemble de propulsion selon un mode de réalisation de l'invention, comportant un double volant d'inertie intégrant un absorbeur de vibration ;

- la figure 2, une vue en perspective d'une partie du double volant d'inertie de l'ensemble de propulsion de la figure 1 ;

- la figure 3, une vue en coupe du double volant d'inertie de la figure 2;

- la figure 4, une vue de face d'une partie du double volant d'inertie de la figure 2;

- la figure 5, une vue schématique d'un ensemble de propulsion selon un autre mode de réalisation de l'invention;

- la figure 6, une vue schématique d'un ensemble de propulsion selon un autre mode de réalisation de l'invention;

- la figure 7, une vue schématique d'un ensemble de propulsion selon un autre mode de réalisation de l'invention;

- la figure 8, une vue en perspective d'un absorbeur de vibration selon un autre mode de réalisation de l'invention;

- la figure 9, une vue en perspective d'une partie intérieure de l'absorbeur de vibration de la figure 8;

- la figure 10 une vue en coupe de l'absorbeur de vibration de la figure 8.

- les figures 11 à 13 présentent un autre mode de réalisation.

- les figures 14 à 16 présentent un autre mode de réalisation.

- les figures 17 à 19 présentent un autre mode de réalisation.

- les figures 20 et 21 présentent un autre mode de réalisation.

Pour plus de clarté, les éléments identiques ou similaires sont repérés par des signes de référence identiques sur l'ensemble des figures.

**DESCRIPTION DÉTAILLÉE DE MODES DE REALISATION**

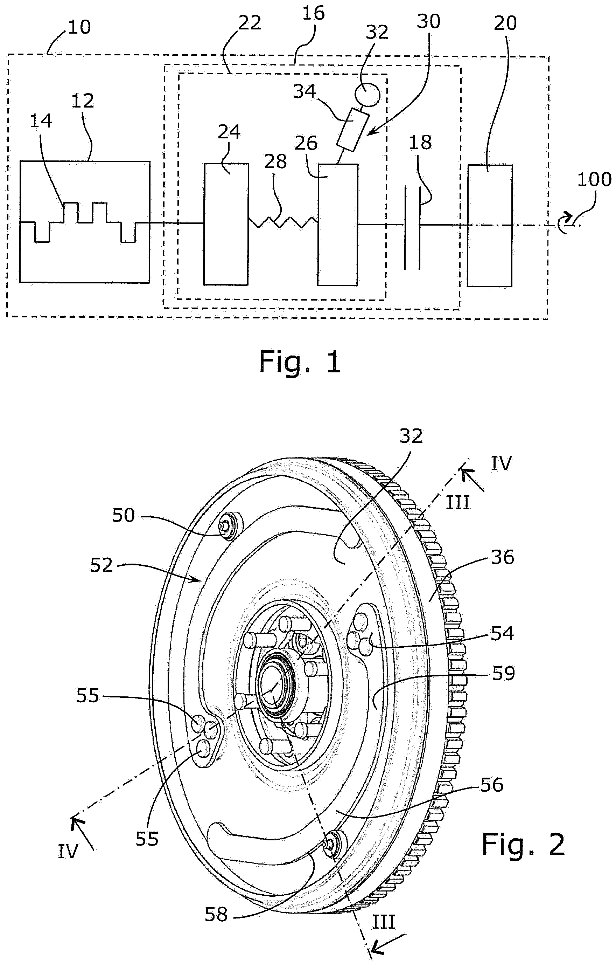

Sur la figure 1 est illustré un ensemble de propulsion 10 de véhicule automobile comportant un moteur à combustion interne 12 dont le vilebrequin 14 entraîne une chaîne cinématique de transmission 16 comportant un embrayage sec 18 situé en amont d'un arbre d'entrée 20 de boîte de transmission. Cinématiquement entre le vilebrequin 14 et l'embrayage 18 à friction dans la chaîne cinématique de transmission 16 est disposé un mécanisme d'amortissement 22 constituant un double volant amortisseur 22 et comportant un organe d'entrée constitué par un volant primaire 24 solidaire du vilebrequin 14

et un organe de sortie constitué par un volant secondaire 26 solidaire d'un plateau de réaction de l'embrayage 18 ou ne faisant qu'une pièce avec celui-ci. Des organes élastiques 28 sont interposés entre l'organe d'entrée et l'organe de sortie de manière à travailler lors de fluctuations de positionnement angulaire entre volant primaire 24 et volant secondaire 26. Un absorbeur de vibration 30 selon l'invention, comportant un volant d'inertie oscillant 32 disposé en dérivation par rapport à la chaîne cinématique reliant le vilebrequin 14 à la boîte de vitesse, et des modules de liaison 34 reliant le volant d'inertie oscillant 32 au volant secondaire 26, permet une atténuation des vibrations à bas régime du volant secondaire 26. Le vilebrequin 14, le mécanisme d'amortissement 22, l'embrayage 18 et l'arbre d'entrée 20 de la boîte de transmission tournent autour d'un même axe de révolution 100.

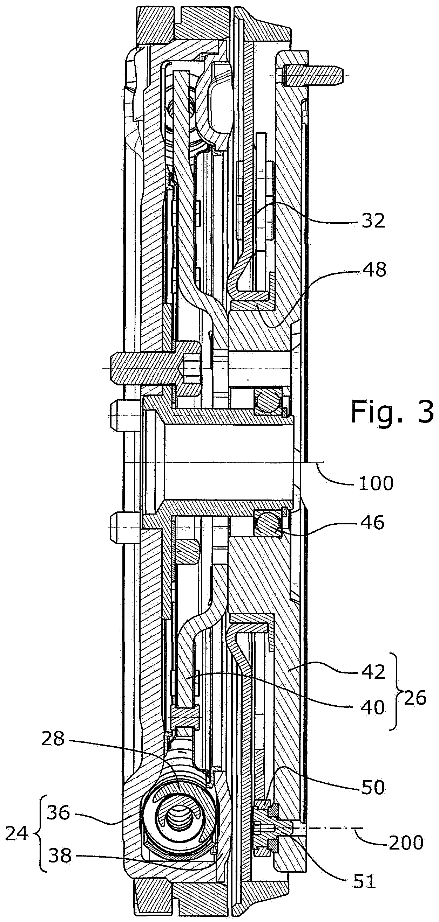

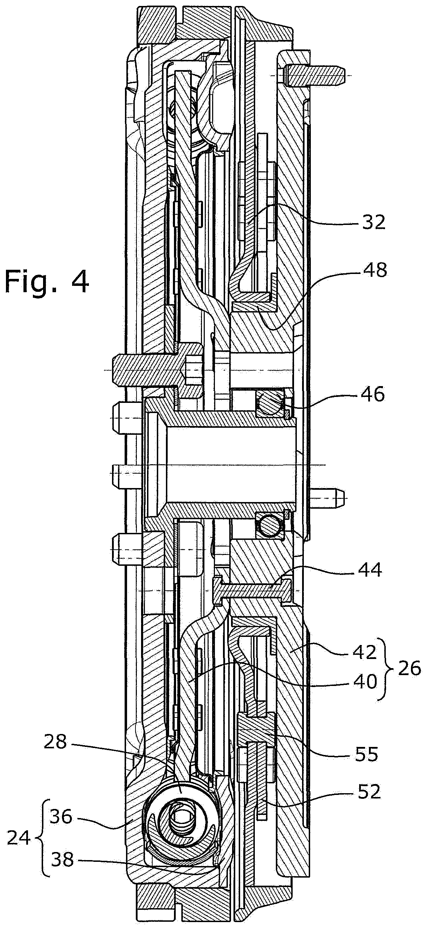

La structure du double volant amortisseur 22 et de l'absorbeur de vibration 30 est illustrée en détail sur les figures 2 à 4. Le volant primaire 24 est composé d'un plateau 36 et d'un couvercle 38 fixés l'un à l'autre, entre lesquels sont disposés des ressorts à boudin constituant les organes élastiques 28 et un voile 40 du volant secondaire 26. Le volant secondaire 26 comporte en outre un plateau massif 42 fixé au voile 40 par des rivets 44, qui forme également le plateau de réaction de l'embrayage 18 à friction. Un palier à roulement 46 assure le guidage en rotation du volant secondaire 26 par rapport au volant primaire 24.

Entre le couvercle 38 et le plateau 42 est disposé le volant d'inertie oscillant 32, guidé en rotation par rapport au volant secondaire 26 par un palier lisse 48.

Le volant d'inertie secondaire 26 comporte un moyeu à l'intérieur duquel est frette le palier à roulement 46 et à l'extérieur duquel est fretté le palier lisse 48.

Avantageusement, le volant d'inertie oscillant 32 comporte un disque en tôle embouti de manière à former sur sa partie centrale une partie cylindrique, parallèle à l'axe de révolution, et supportée par le palier 48. Une masse annulaire peut être fixée sur le diamètre extérieur de ce disque pour augmenter l'inertie.

Les modules de liaison 34 reliant le volant d'inertie oscillant 32 au volant secondaire 26 sont au nombre de deux et comprennent chacun un galet 50 monté mobile en rotation autour d'une tige 51 pour tourner par rapport au volant secondaire 26 autour d'un axe de rotation 200 parallèle à l'axe de révolution 100 et situé à distance de ce dernier, et une lame élastique 52 comportant une portion d'extrémité 54 fixée au volant d'inertie oscillant 32 par des rivets 55. Des roulements tels que des billes ou des aiguilles peuvent être placés entre la tige 51 et le galet 50 pour favoriser le roulement. La lame élastique comporte en outre une portion flexible comprenant une portion de guidage ou came 56 qui forme un chemin de came 58 situé radialement à l'intérieur du galet 50, c'est-à-dire entre le galet 50 et l'axe de révolution 100, et en appui sur le galet 50, et une portion intermédiaire de déformation élastique 59. Des butées (non visibles sur les figures) limitent le débattement angulaire possible entre le volant d'inertie oscillant **32** et le volant secondaire **26**, de part et d'autre d'une position relative de référence, dans laquelle le galet **50** est en contact avec une zone du chemin de came **58**, dite zone de référence ou zone d'équilibre, qui est orthoradiale par rapport à l'axe de révolution **100**, c'est-à-dire qui, dans un plan perpendiculaire à l'axe de révolution **100** et à l'axe de rotation **200**, est tangente à une perpendiculaire à un axe radial passant par l'axe de révolution **100** et l'axe de rotation **200**. La position de référence correspond donc à un couple nul transmis entre le volant secondaire **26** et le volant d'inertie d'oscillation, ceci indépendamment de la vitesse de rotation puisque les efforts au contact entre le galet **50** et le chemin de came **58** dans la position de référence sont purement radiaux.

La courbure du chemin de came **58** de part et d'autre de la position de référence est telle que la normale au point de contact du chemin de came **58** avec le galet **50** a une composante orthoradiale orientée vers la position de référence, qui augmente lorsque le débattement angulaire θ par rapport à la position de référence augmente. En roulant sur le chemin de came **58**, de part et d'autre de la position de référence, le galet **50** fait fléchir la lame élastique **52** au niveau de la portion intermédiaire de déformation **59**. On s'assure ainsi que le contact entre le galet **50** et le chemin de came **58** génère respectivement sur le volant d'inertie oscillant **32** et sur le volant secondaire **26** deux couples opposés autour de l'axe de révolution **100**, tendant à rappeler le volant d'inertie oscillant **32** et le volant secondaire **26** vers la position de référence.

On considérera dans la suite le couple de rappel vers la position de référence, transmis par l'interaction entre le galet **50** et le chemin de came **58** au volant secondaire **26**, qui constitue ici l'organe à amortir. La lame élastique **52** présente une raideur en flexion, de sorte que, même à l'arrêt, le couple de rappel a une composante élastique $\Gamma_1$ de rappel vers la position relative de référence, fonction du débattement angulaire θ entre les deux organes tournants **26, 32**. En première approximation, en négligeant les déformations de la lame élastique **52** en fonction de la vitesse de révolution, on peut considérer que cette composante élastique $\Gamma_1$ est relativement indépendante de la vitesse de révolution, et peut le cas échéant être estimée à l'arrêt.

Par ailleurs, la lame élastique **52** présente une inertie qui, lorsque la lame élastique **52** tourne à une vitesse de révolution $\omega$, génère un effort centrifuge sur le galet **50**, de sorte que le couple de rappel présente une composante $\Gamma_2$ de rappel inertiel vers la position de référence, fonction du débattement angulaire θ entre les deux organes tournants **26, 32** et de la vitesse de révolution $\omega$.

Les deux composantes $\Gamma_1$ et $\Gamma_2$ que l'on a ici décrites séparément et pour chaque module de liaison **34,** s'additionnent pour générer globalement un couple résultant $\Gamma_R$ exercé sur le volant secondaire **26**, qui peut être mesuré sur un banc d'essai en faisant tourner le volant secondaire **26** et le volant d'inertie oscillant **32** à une vitesse de révolution ω donnée, et en mesurant le couple nécessaire au maintien d'un débattement angulaire θ donné.

Pour que le comportement de l'absorbeur de vibration **30** se rapproche de celui d'un pendule avec un bon degré d'approximation, on choisit la raideur de la lame élastique **52** et la pente du chemin de came **58** de manière à ce que le couple résultant $\Gamma_R$ soit, avec un bon degré d'approximation, proportionnel au débattement angulaire θ à vitesse de révolution ω donnée dans une plage de vitesse comprise entre une valeur minimale $\omega_{min}$ prédéterminée inférieure à 1000 tr/min et une valeur maximale prédéterminée $\omega_{max}$ supérieure à 1500 tr/min, et proportionnel au carré de la vitesse de révolution ω pour un débattement angulaire θ donné dans la plage des débattements angulaires possibles. En l'espèce, on fait en sorte qu'il existe une constante C positive, telle que dans la plage de vitesse entre $\omega_{min}$ et $\omega_{max}$ :

$$\frac{3}{4}C \leq \left|\frac{\Gamma_R}{\theta \cdot \omega^2}\right| \leq \frac{5}{4}C$$

On peut alors définir une raideur apparente K de l'absorbeur de vibration 30, égale au quotient du couple résultant $\Gamma_R$ par le débattement angulaire θ correspondant, cette raideur K étant sensiblement proportionnelle au carré de la vitesse de révolution ω et telle que:

$$\frac{3}{4}C\omega^2 \leq K \leq \frac{5}{4}C\omega^2$$

Pour toute vitesse de révolution donnée ω dans la plage de vitesse entre la plage de vitesses entre $\omega_{min}$ et $\omega_{max}$, l'absorbeur de vibration **30** se comporte comme un pendule ayant une fréquence de résonance d'oscillation $F_V$ fonction de la raideur apparente K et de l'inertie I du volant d'inertie oscillant **32**. À un premier degré d'approximation, cette raideur K est liée à la fréquence de résonance d'oscillation $F_V$ et au moment d'inertie du volant d'inertie oscillant **32** par une équation simple du type:

$$F_V = \frac{1}{2\pi}\sqrt{\frac{K}{I}}$$

Le mécanisme de filtrage doit être accordé aux fluctuations de couple que l'on cherche à atténuer. Or on sait que la fréquence principale d'acyclisme d'un moteur dépend du type du moteur **12** et notamment du nombre de cylindres. Ainsi, pour un moteur **12** à quatre temps, donc à une combustion par cylindre tous les deux tours de vilebrequin **14,** la fréquence principale d'acyclisme

$F_M$ correspond généralement à la fréquence de combustion des cylindres soit, pour un moteur à N cylindres et pour une vitesse de révolution $\omega$ du vilebrequin **14** donnée :

$$F_M = \frac{\omega}{2} N$$

En accordant la fréquence de résonance d'oscillation de l'absorbeur de vibration **30** sur la fréquence principale d'acyclisme $F_M(\omega)$ du moteur **12,** pour une plage de vitesses de révolution, on permet à l'absorbeur de vibration **30** de battre en opposition de phase par rapport aux acyclismes, d'où une atténuation importante du niveau vibratoire. L'organe tournant **26** relié au vilebrequin **14** est ainsi sollicité par des couples antagonistes en opposition de phase qui se compensent au moins partiellement, à savoir d'une part un couple acyclique d'entrée, en provenance du vilebrequin **14,** et d'autre part un couple oscillant transmis par les modules de liaison **34.** Pour obtenir l'accord souhaité entre la fréquence de résonance d'oscillation de l'absorbeur de vibration **30** et la fréquence principale d'acyclisme, on met à profit la possibilité qu'offre le module de liaison **34** selon l'invention de faire varier, avec le profil des chemins de came, la loi reliant le débattement angulaire θ entre les deux organes tournants **26, 32** et le couple transmis.

En l'occurrence, on fait en sorte que pour une valeur $\omega_0$ dans la plage de vitesses de révolution entre $\omega_{min}$ et $\omega_{max}$, la fréquence principale d'acyclisme du moteur coïncide avec la fréquence de résonance d'oscillation Fv de l'absorbeur de vibration **30,** ce qui se traduit par:

$$\frac{1}{2\pi} \sqrt{\left| \frac{\Gamma_R}{\theta \cdot \omega^2 \cdot I} \right|} = \frac{\omega_0}{2} N$$

L'absorbeur de vibration **30** ne permet pas d'obtenir cette égalité parfaite pour toute la plage de vitesses de révolution entre $\omega_{min}$ et $\omega_{max}$, et la divergence observée croît lorsque l'on s'éloigne de la valeur d'accord $\omega_0$. En ce sens, l'absorbeur de vibration **30** est moins performant qu'un pendule oscillant. Toutefois, la performance d'atténuation des vibrations reste très intéressante, et est obtenue avec des moyens particulièrement simples.

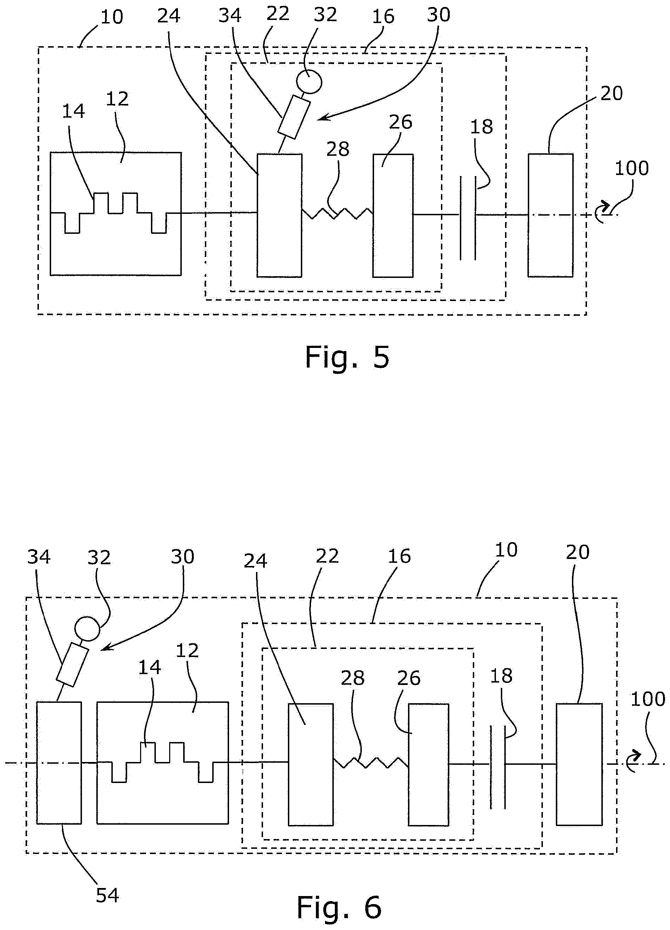

L'absorbeur de vibration **30** selon l'invention peut être disposé à différents endroits dans l'ensemble de propulsion **10,** comme illustré par exemple sur les figures 5 à 7.

Sur la figure 5, on a schématisé un absorbeur de vibration **30** selon l'invention, monté en dérivation sur un volant primaire **24** d'un double volant amortisseur **22.**

Sur la figure 6, on a illustré un absorbeur de vibration **30** autonome, monté directement sur le vilebrequin **14** du moteur à combustion interne **12,** le cas échéant à une extrémité du vilebrequin **14** opposée à l'embrayage **18.**

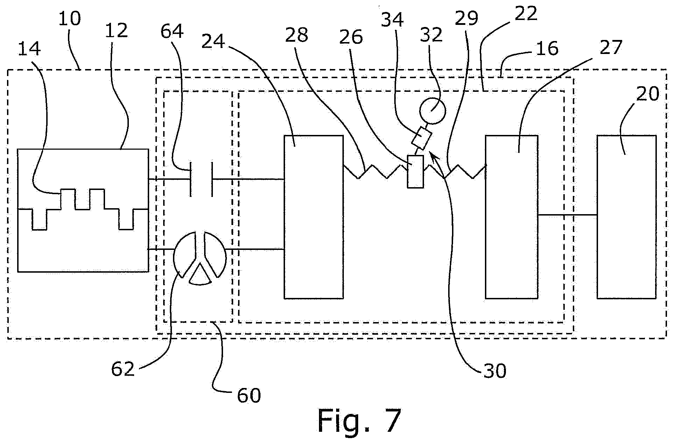

Sur la figure 7 est illustré de façon schématique un ensemble de propulsion **10** comportant un moteur à combustion interne **12** et une chaîne cinématique de transmission **16** comportant un convertisseur de couple **60** situé entre un vilebrequin **14** du moteur à combustion interne **12** et un arbre d'entrée **20** de boîte de transmission. Ce convertisseur de couple **60** comporte de manière connue en soi un convertisseur hydrocinétique **62** et un embrayage de verrouillage **64** disposés en parallèle entre le vilebrequin **14** et un organe d'entrée **24** d'un mécanisme d'amortissement **22** dont l'organe de sortie **27** est solidaire à l'arbre d'entrée **20** de la boîte transmission. Un organe intermédiaire de phasage **26** est interposé en série entre l'organe d'entrée **24** et l'organe de sortie **27,** relié à l'organe d'entrée **24** par un premier organe élastique **28** et à l'organe de sortie **27** par un deuxième organe élastique **29.** Cet organe intermédiaire est en outre relié à un volant d'inertie oscillant **32** par l'intermédiaire de modules de liaison **34** formant un mécanisme oscillant.

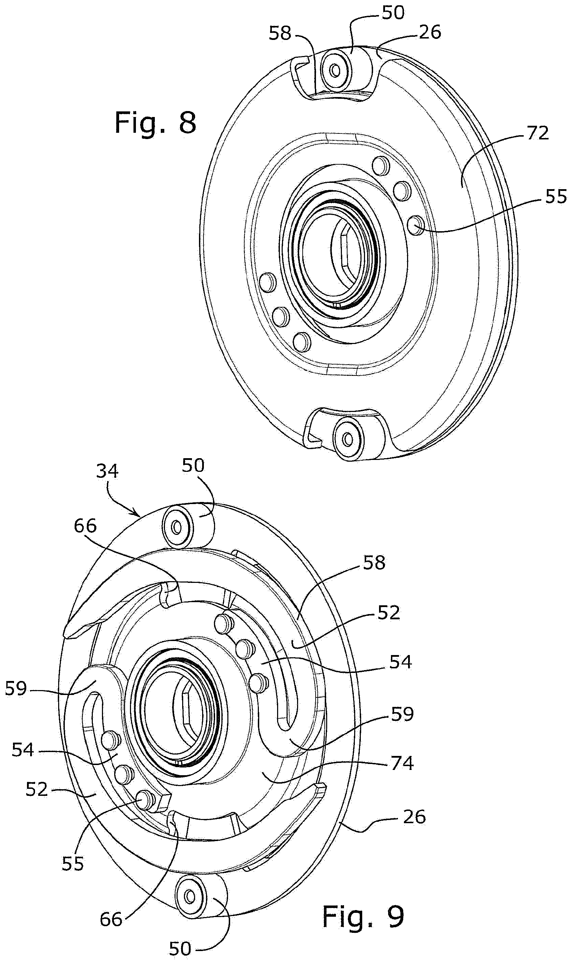

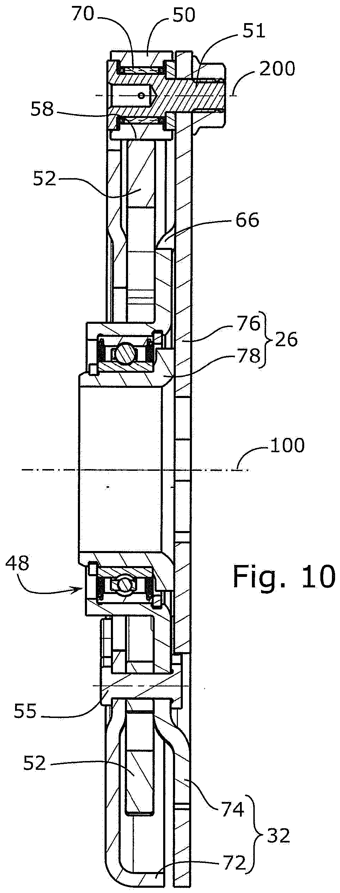

Sur les figures 8 à 10 est illustré un absorbeur de vibration **30** suivant un autre mode de réalisation de l'invention, adapté par exemple à un montage autonome tel qu'envisagé sur la figure 6 ou à un montage entre un double volant amortisseur **22** et un embrayage **18** à friction. Ce mécanisme comporte un premier organe tournant **26** autour d'un axe de révolution **100,** un deuxième organe tournant **32** autour de l'axe de révolution **100,** un palier à roulement **48** de guidage entre le premier organe tournant **26** et le deuxième organe tournant **32,** deux modules de liaison **34** permettant un débattement angulaire relatif entre les deux organes tournants **26, 32** et des butées **66** limitant ce débattement angulaire relatif.

Chaque module de liaison **34** comporte, de manière similaire au premier mode de réalisation, un galet **50** roulant sur un chemin de came **58** formé sur une lame élastique **52.** Le galet **50** est ici monté sur le premier organe tournant **26** de manière à pouvoir tourner librement autour d'un axe de rotation **200** parallèle à l'axe de révolution **100** et situé à distance de l'axe de révolution **100,** l'axe de rotation **200** étant matérialisé par une tige **51** et par un palier lisse ou à roulement **70** interposé entre la tige **51** et le galet **50.** La lame élastique **52** présente une forme recourbée sur elle-même en U, dont une branche constitue une portion d'extrémité **54** fixée au deuxième organe tournant **32** et dont l'autre branche forme le chemin de came **58,** les deux branches **54, 58** étant reliée par une partie coudée déformable **59** recourbée sur elle-même. Le deuxième organe tournant **32** est ici en deux pièces **72, 74** entre lesquelles sont disposées les lames élastiques **52,** les deux pièces **72, 74** étant fixées l'une à l'autre par des rivets **55** traversant les lames élastiques **52.** Le premier organe tournant **26** est quant à lui formé par un volant **76** sur lequel est soudé un manchon **78,** le palier de guidage **48** étant fretté sur le manchon **78** et dans une partie tubulaire de la pièce **74** du deuxième organe tournant **32.** Les butées **66** sont constituées par des surfaces des deux organes tournants **26, 32** qui viennent en contact lorsqu'est atteinte la limite de débattement angulaire relatif entre les deux organes tournants **26, 32.** Ces butées sont formées d'une part par une extension axiale de l'une des pièces du deuxième organe tournant **32** tournant autour de l'axe **100** et d'autre part par le rebord d'une fenêtre du premier organe tournant **26.**

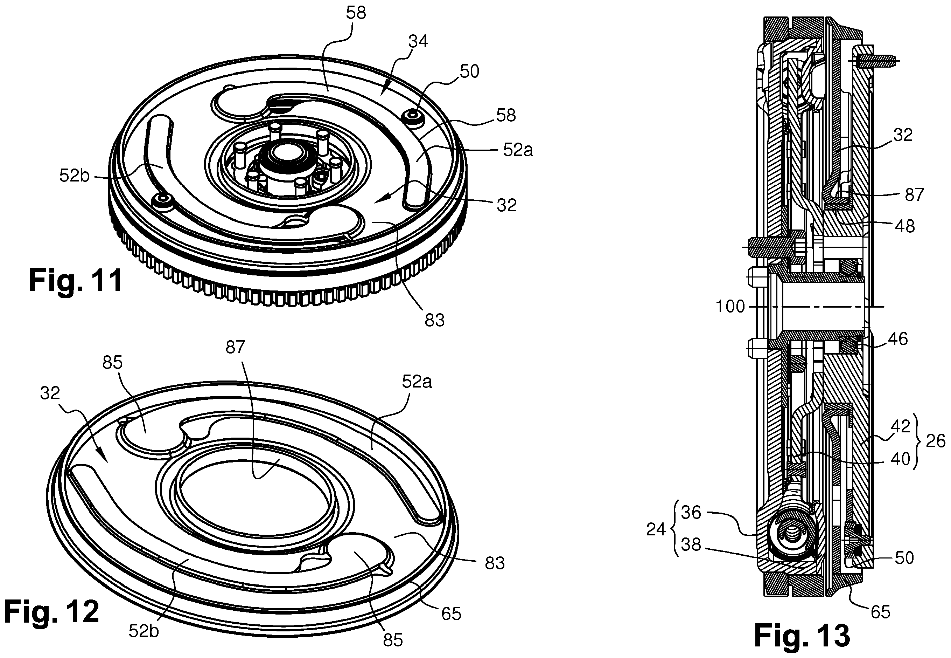

Sur les figures 11 à 13 est illustré un absorbeur de vibration **30** suivant un autre mode de réalisation de l'invention. Il s'agit d'une structure de double volant amortisseur. L'organe à amortir est le volant d'inertie secondaire 42 du double volant amortisseur. Le volant secondaire porte deux galets 50. L'absorbeur de vibration comporte deux lames flexibles 52a et **52**b dotée chacune d'un chemin de came 58, et d'une portion flexible 59 apte à fléchir pour assurer un appui élastique du chemin de came 58 contre un galet 50 correspondant.

Ce mode de réalisation se distingue de celui représenté sur les figures 2 à 4 par le mode de fixation des lames 52a et 52b sur le volant d'inertie 32.

Selon ce mode de réalisation, le volant d'inertie comporte une tôle annulaire 83 et une couronne d'inertie 65 fixée radialement à l'extérieur de cette tôle annulaire. La tôle annulaire 83 est disposée dans un plan perpendiculaire à l'axe de rotation 100. Ici, les lames 52a et 52b et la tôle annulaire sont formées d'une seule pièce.

En effet, la portion flexible des lames flexibles est formée au moyen d'une découpe réalisée dans la tôle annulaire. Cette découpe permet d'obtenir le contour extérieur des portions flexibles 58 des lames 52a et 52b. Les lames sont reliées à la tôle annulaire par l'intermédiaire d'une embase 85.

Ici, chaque embase 85 est emboutie de manière à ce que chaque lame 52a et 52b soit déportée axialement par rapport à la tôle annulaire 83 du volant d'inertie 32. Ainsi, grâce à l'emboutissage de l'embase 85, chaque lame 52a, 52b est apte fléchir dans un plan parallèle au plan dans laquelle est disposée la tôle annulaire 83. Ainsi, la découpe réalisée pour former la portion flexible de lame peut suivre globalement la forme que l'on souhaite donner à la lame. Un enlèvement de matière, réalisé également par découpe, peut être effectué dans la tôle annulaire autour de la zone de jonction entre l'embase et la portion flexible des lames 52a et 52b de façon à favoriser l'emboutissage.

Radialement à l'intérieur, la tôle 83 est également emboutie de manière à former une jupe de montage 87. Un palier 48 agencé entre cette jupe de montage 87 et un moyeu du volant d'inertie secondaire 42 assure le montage rotatif du volant d'inertie 32 par rapport au volant d'inertie secondaire 42.

Ainsi, avec ce mode de réalisation, la fabrication des lames est simplifiée et il n'est plus nécessaire d'avoir recours à des moyens d'assemblage.

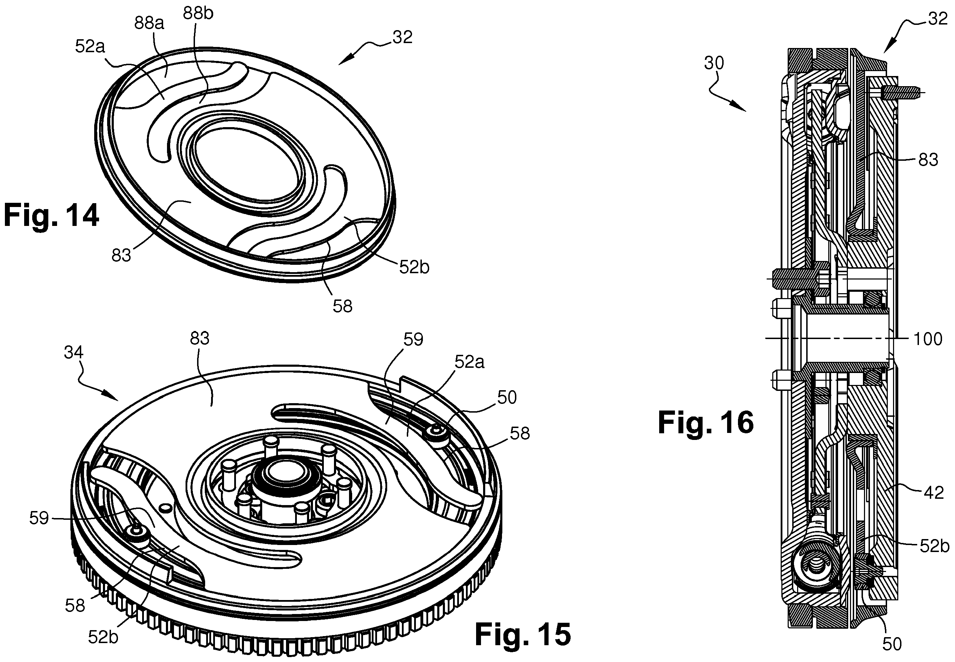

Sur les figures 14 à 16 est illustré un absorbeur de vibration **30** suivant un autre mode de réalisation de l'invention. Il s'agit d'une structure de double volant amortisseur. L'organe à amortir est le volant d'inertie secondaire 42 du double volant amortisseur. Le volant secondaire porte deux suiveurs de came tels que des galets 50. L'absorbeur de vibration comporte deux lames flexibles 52a et **52**b dotée chacune d'un chemin de came 58, et d'une portion flexible 59 apte à fléchir pour assurer un appui élastique du chemin de came 58 contre un galet 50 correspondant.

Ce mode de réalisation se distingue de celui représenté sur les figures 11 à 13 par le mode d'obtention des lames 52a et 52b sur le volant d'inertie 32.

Ici, les lames 52a et 52b et la tôle annulaire 83 sont encore formées d'une seule pièce. En revanche, les lames sont aptes à fléchir dans le même plan que le plan dans lequel est disposée la tôle annulaire 83.

Par conséquent, une échancrure 88a est requise radialement à l'extérieur de la portion flexible de chaque lame de manière à autoriser le déplacement d'un galet sur le chemin de came 58 de chaque lames 52a, 52b.

De même, une autre échancrure 88b est requise radialement à l'intérieur de la portion flexible de chaque lame de manière à autoriser un débattement radial de la lame en direction de l'axe 100 lorsque le galet 50 se déplace sur le chemin de came 58.

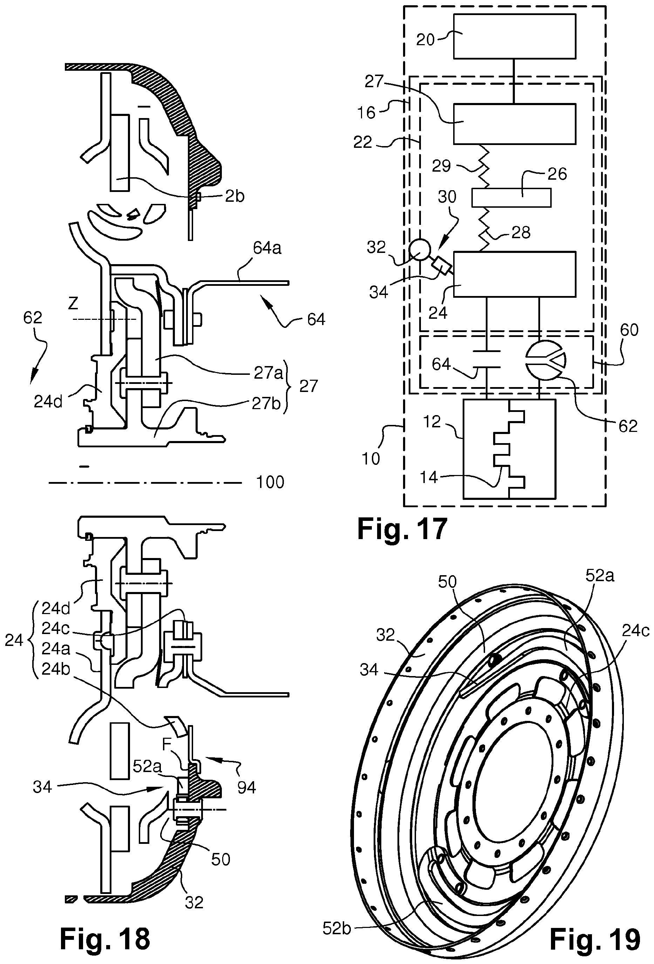

Sur la figure 17 est illustré de façon schématique un ensemble de propulsion **10** comportant un moteur à combustion interne **12** et une chaîne cinématique de transmission **16** comportant un convertisseur de couple **60** situé entre un vilebrequin **14** du moteur à combustion interne **12** et un arbre d'entrée **20** de boîte de transmission. Ce convertisseur de couple **60** comporte de manière connue en soi un convertisseur hydrocinétique **62** et un embrayage de verrouillage **64** disposés en parallèle entre le vilebrequin **14** et un organe d'entrée **24** d'un mécanisme d'amortissement **22** dont l'organe de sortie **27** est solidaire à l'arbre d'entrée **20** de la boîte transmission. Un organe intermédiaire de phasage **26** est interposé en série entre l'organe d'entrée **24** et l'organe de sortie **27,** relié à l'organe d'entrée **24** par un premier organe élastique **28** et à l'organe de sortie **27** par un deuxième organe élastique **29.**

L'absorbeur de vibration est donc intégré ici à un convertisseur de couple 60. Ici l'organe d'entrée 24 est relié à un volant d'inertie oscillant **32** par l'intermédiaire de modules de liaison **34** qui forment ensemble un mécanisme oscillant.

Les figures 18 et 19 représentent une première variante de ce mode de réalisation dans laquelle l'organe d'entrée 24 porte deux lames flexibles dotées chacune d'un chemin de came 58. Deux galets 50 sont montés rotatifs sur un volant d'inertie 32. Ces galets peuvent être montés mobiles en rotation autour d'une tige fixée sur le volant d'inertie oscillant 32, par un palier lisse ou à roulements.

L'organe d'entrée 24 est composé d'une part de rondelles de guidage 24a et 24b agencées axialement de part et d'autre des ressorts 28 et 29.

L'organe d'entrée 24 est composée d'autre part d'un élément de support 24c formé dans une tôle. Cette tôle de support 24c porte les modules de liaison 34. Les lames élastiques 52a et 52b du module sont montées sur la tôle de support 24c.

En outre, l'organe d'entrée 24 est composé d'un moyeu de turbine 24d. Le moyeu de turbine 24d et la première rondelle de guidage 24a sont fixées entre elles, notamment au moyen d'un organe de montage tel qu'un rivet pouvant être monté le long de l'axe Z.

D'autre part, la tôle de support 24c est fixée sur la seconde rondelle de guidage 24b. La tôle de support **24c** est fixée également à une pièce de liaison 64a de l'embrayage de verrouillage 64. Dans cette variante, la tôle de support 24c est prise en sandwich entre la pièce de liaison 64a de l'embrayage de verrouillage 64 et la seconde rondelle de guidage 24b. La pièce de liaison 64a de l'embrayage de verrouillage 64, la seconde rondelle de guidage 24b, et l'élément de support en tôle 24c sont assemblées ensemble avec des moyens de fixation tels que des rivets.

L'absorbeur de vibration comporte une zone de centrage F circulaire autour de l'axe de rotation 100 qui assure un centrage du volant d'inertie 32 sur la tôle de support 24c. Pour ce faire le bord radialement externe 94 de la tôle de support 24c est replié pour former une surface de coopération avec le volant d'inertie 32. Le bord radialement externe de la tôle de support 24c forme une chicane 94 formant d'une part une surface de frottement cylindrique et d'autre part un élément de retenue axiale.

Les rondelles de guidage 24a et 24b sont solidaires en rotation l'une de l'autre grâce à une patte de liaison s'étendant axialement.

En sortie, un voile de sortie 27a en appui contre des ressorts 29 est fixé à un moyeu de sortie 27b apte à entraîner un arbre d'entrée de boîte de vitesse.

Avantageusement, le volant d'inertie présente une forme de pot et les ressorts et les rondelles de guidage sont agencés à l'intérieur de ce pot.

Dans une deuxième variante non représentée de ce mode de réalisation, les lames peuvent être fixées sur le volant d'inertie et les galets peuvent être montés mobiles en rotation sur l'élément de support.

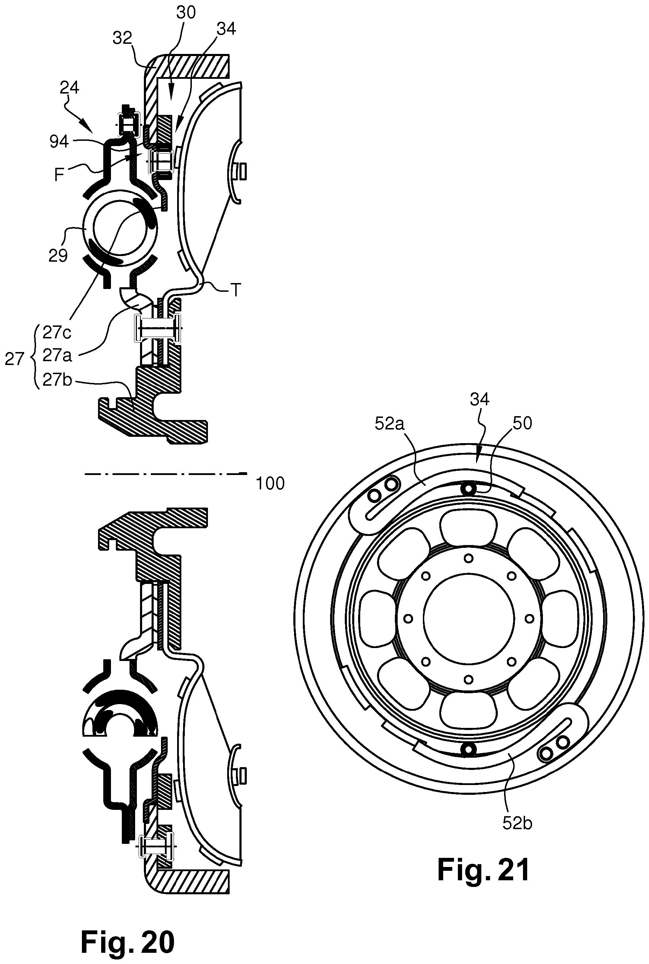

Dans un autre mode de réalisation illustré sur les figures 20 et 21, l'absorbeur de vibration est intégré à un organe de sortie de convertisseur de couple. L'organe de sortie 27 est relié à un volant d'inertie oscillant **32** par l'intermédiaire de modules de liaison **34** qui forment ensemble un mécanisme oscillant.

Les figures 20 et 21 représentent une première variante de ce mode de réalisation dans laquelle l'organe de sortie 27 porte deux suiveurs de came tels que des galets 50. Deux lames flexibles 52a et 52b dotées chacune d'un chemin de came 58 sont montées sur le volant d'inertie 32.

L'organe de sortie 27 est composé d'une part d'un voile de sortie 27a en appui contre les ressorts 29 et d'un moyeu de sortie 27b. Les ressorts sont intercalés circonférentiellement entre l'organe d'entrée 24, formé par des rondelles de guidage, et le voile de sortie 27a.

L'organe de sortie est composé d'autre part d'un élément de support 27c formé dans une tôle. Cette tôle de support 27c porte les modules de liaison 34. Les galets 50 du module sont montés mobile en rotation sur cette tôle de support 27c.

La tôle de support 27c donc montée solidaire en rotation du voile de sortie 27a, et du moyeu de sortie 27b. La tôle de support 27c est également montée solidaire en rotation de la turbine T. Dans cette variante, la tôle de support 27c est prise en sandwich entre d'une part, l'un parmi la turbine T et le moyeu de sortie 27b, et d'autre part le voile de sortie 27a. Dans la variante représentée, la tôle de support 27c est prise en sandwich entre la turbine T et le moyeu de sortie 27b, et la turbine T est prise en sandwich entre la tôle de support 27c et le moyeu de sortie. La turbine T, le voile de sortie 27a, le moyeu de sortie 27b et la tôle de support 27c sont rivetées ensemble des moyens de fixation communs tels que des rivets.

L'absorbeur de vibration comporte une zone de centrage F circulaire autour de l'axe de rotation 100 qui assure un centrage du volant d'inertie 32 sur la tôle de support 24c. Pour ce faire, le bord radialement externe 94 de la tôle de support 24c est replié pour former une surface de coopération avec le volant d'inertie 32. Le bord radialement externe 94 de la tôle de support 24c forme une chicane 94 formant d'une part une surface de frottement cylindrique et d'autre part un élément de retenue axiale.

Dans une deuxième variante non représentée de ce mode de réalisation, les galets peuvent être fixées sur le volant d'inertie et les lames peuvent être montées sur l'élément de support.

Dans le cadre d'un convertisseur de couple, les suiveurs de came peuvent aussi être réalisés sous la forme de bossages aptes à se déplacer le long du chemin de came.

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres. Le chemin de came **58** et le galet **50** peuvent être lisses ou dentés, pour assurer un engrènement du type à pignon et crémaillère. Le galet **50** peut être libre et rouler sur le chemin de came **58** formé sur la lame élastique **52** liée à l'un des organes tournants **26, 32** et un autre chemin de came **58** formé sur l'autre organe tournant, les deux chemins de came étant en regard l'un de l'autre, le chemin de came **58** formé sur la lame élastique **52** étant disposé radialement à l'intérieur de l'autre chemin de came **58.**

De même, d'autres formes et géométries de lames peuvent être mises en œuvre pour réaliser la présente invention.

## Revendications

1. Absorbeur de vibration (30), de type batteur inertiel, comportant:

   - deux organes tournants (26, 32) guidés en rotation autour d'un axe de révolution (100), l'un des deux organes tournants (26, 32) étant un volant d'inertie (32) oscillant autour de l'axe de révolution (100) et l'autre des deux organes tournants (26, 32) étant un organe à amortir (26), l'organe à amortir (26) étant agencé pour être entraîné par un couple empruntant un chemin de couple entre un organe menant et un organe mené, le volant d'inertie étant agencé pour être relié cinématiquement au chemin de couple entre l'organe menant et l'organe mené uniquement par l'intermédiaire de l'organe à amortir; et
   - un ou plusieurs modules de liaison (34) entre les deux organes tournants (26, 32), permettant un débattement angulaire relatif θ entre les deux organes tournants (26, 32) autour de l'axe de révolution (100) de part et d'autre d'une position angulaire relative de référence,

   **caractérisé en ce que** chaque module de liaison (34) comporte:

   - un galet (50) associé à un premier des deux organes tournants et
   - un chemin de came (58) relié élastiquement par un élément élastique à un deuxième des deux organes tournants (32), l'élément élastique étant apte à se déformer pour assurer un appui élastique du chemin de came (58) contre le galet (50) permettant au galet (50) de rouler sur le chemin de came (58) lorsque les deux organes tournants (26, 32) tournent l'un par rapport à l'autre de part et d'autre de la position de référence.

2. Absorbeur de vibration (30) selon la revendication 1, **caractérisé en ce que** l'élément élastique est agencé de sorte que la raideur de l'élément élastique augmente lorsque la vitesse de rotation de l'absorbeur de vibration augmente.

3. Absorbeur de vibration (30) selon l'une quelconque des revendications précédentes, **caractérisé en ce qu'**il comporte une lame élastique (52) constituant l'élément élastique et comportant :

   - une portion de fixation (54) fixée au deuxième des deux organes tournants (32), et
   - une portion flexible (59) apte à fléchir pour assurer un appui élastique du chemin de came (58) contre le galet (50) permettant au galet (50) de rouler sur le chemin de came (58) lorsque les deux organes tournants (26, 32) tournent l'un par rapport à l'autre de part et d'autre de la position de référence.

4. Absorbeur de vibration (30) selon la revendication 3, caractérisé en ce la portion flexible (59) comporte une portion intermédiaire de déformation (59), reliant la portion de fixation (54) au chemin de came (58).

5. Absorbeur de vibration (30) selon la revendication 4, **caractérisé en ce que** la portion intermédiaire de déformation (59) est conformée en U dans un plan perpendiculaire à l'axe de révolution (100).

6. Absorbeur de vibration (30) selon la revendication 4, **caractérisé en ce que** la portion flexible (59) est recourbée circonférentiellement autour de l'axe de rotation (100) s'étendant jusqu'à une extrémité libre agencée pour se déplacer avec une composante radiale lorsque les deux organes tournants (26, 32) tournent l'un par rapport à l'autre.

7. Absorbeur de vibration (30) selon l'une quelconque des revendications précédentes, **caractérisé en ce que** le chemin de came (58) est tourné radialement vers l'extérieur et vers le galet (50).

8. Absorbeur de vibration (30) selon l'une quelconque des revendications précédentes, **caractérisé en ce que** l'élément élastique est agencé de manière à permettre un déplacement du chemin de came (58) ayant une composante radiale lorsque les deux organes tournants (26, 32) tournent l'un par rapport à l'autre.

9. Absorbeur de vibration (30) selon l'une quelconque des revendications précédentes, **caractérisé en ce que** le galet (50) est un galet pivotant autour d'un axe de rotation (200) fixe par rapport au premier organe tournant (26).

10. Absorbeur de vibration (30) selon l'une quelconque des revendications précédentes, **caractérisé en ce qu'**une butée (66) limite le débattement angulaire entre les deux organes tournants (26, 32).

11. Absorbeur de vibration (30) selon l'une quelconque des revendications précédentes, **caractérisé en ce que** le ou les modules de liaison sont tels que lorsque l'organe à amortir tourne à une vitesse de révolution $\omega$, le ou les modules de liaison génèrent ensemble entre les deux organes tournants un couple résultant $\Gamma_R$ de rappel vers la position de référence, fonction du débattement angulaire θ entre les deux organes tournants et de la vitesse de révolution $\omega$, et tel que:

$$\frac{3}{4}C \le \left|\frac{\Gamma_R}{\theta \cdot \omega^2}\right| \le \frac{5}{4}C$$

où C est une constante positive donnée, lorsque la vitesse de révolution ω varie dans une plage de vitesses entre une valeur minimale ωmin prédéterminée inférieure à 1000 tr/min et une valeur maximale prédéterminée ωmax supérieure à 1500 tr/min.

12. Absorbeur de vibration (30) selon l'une des revendications 3 à 6, **caractérisé en ce que** le volant d'inertie (32) comporte une tôle annulaire (83) et une couronne d'inertie (65) fixée radialement à l'extérieur de cette tôle annulaire (83). les lames élastiques et la tôle annulaire (83) du volant d'inertie étant formées d'une seule pièce.

13. Mécanisme d'amortissement (22) comportant un organe d'entrée (14, 24) et un organe de sortie (26) reliés par une chaîne cinématique de transmission de couple, **caractérisé en ce qu'**il comporte un absorbeur de vibration (30) selon l'une quelconque des revendications précédentes, l'organe à amortir (26) étant constitué par l'organe d'entrée (14, 24), l'organe de sortie (26) ou un élément de la chaîne cinématique de transmission entre l'organe d'entrée (14, 24) et l'organe de sortie (26), le volant oscillant (32) étant disposé en dérivation par rapport à la chaîne cinématique de transmission de couple.

14. Mécanisme d'amortissement selon la revendication précédente, **caractérisé en ce que** l'organe d'entrée (14, 14) est un volant d'inertie primaire (24) de double volant amortisseur et l'organe de sortie (26) est un volant d'inertie secondaire (26) de double volant amortisseur, un palier (46) assurant le guidage en rotation du volant secondaire (26) par rapport au volant primaire (24).

15. Convertisseur de couple comprenant un absorbeur de vibration selon l'une quelconque des revendications 1 à 13.

**Patentansprüche**

1. Schwingungsdämpfer (30) vom Typ eines Trägheitstilgers, welcher umfasst:

   - zwei rotierende Organe (26, 32), die um eine Rotationsachse (100) drehbar geführt werden, wobei eines der zwei rotierenden Organe (26, 32) ein Schwungrad (32) ist, das um die Rotationsachse (100) schwingt, und das andere der zwei rotierenden Organe (26, 32) ein zu dämpfendes Organ (26) ist, wobei das zu dämpfende Organ (26) dazu eingerichtet ist, durch ein Drehmoment angetrieben zu werden, das über einen Drehmomentweg zwischen einem Antriebsorgan und einem angetriebenen Organ geleitet wird, wobei das Schwungrad dazu eingerichtet ist, mit dem Drehmomentweg zwischen dem Antriebsorgan und dem angetriebenen Organ ausschließlich über das zu dämpfende Organ kinematisch verbunden zu werden; und
   - ein oder mehrere Verbindungsmodule (34) zwischen den zwei rotierenden Organen (26, 32), die eine relative Winkelauslenkung θ zwischen den zwei rotierenden Organen (26, 32) um die Rotationsachse (100) beiderseits einer relativen Referenzwinkelposition ermöglichen,

   **dadurch gekennzeichnet, dass** jedes Verbindungsmodul (34) umfasst:

   - eine Rolle (50), die einem ersten der zwei rotierenden Organe zugeordnet ist, und
   - eine Nockenbahn (58), die durch ein elastisches Element mit einem zweiten der zwei rotierenden Organe (32) elastisch verbunden ist, wobei das elastische Element geeignet ist, sich zu verformen, um ein elastisches Andrücken der Nockenbahn (58) an die Rolle (50) sicherzustellen, das der Rolle (50) ermöglicht, auf der Nockenbahn (58) zu rollen, wenn sich die zwei rotierenden Organe (26, 32) relativ zueinander beiderseits der Referenzposition drehen.

2. Schwingungsdämpfer (30) nach Anspruch 1, **dadurch gekennzeichnet, dass** das elastische Element derart ausgebildet ist, dass sich die Steifigkeit des elastischen Elements erhöht, wenn sich die Rotationsgeschwindigkeit des Schwingungsdämpfers erhöht.

3. Schwingungsdämpfer (30) nach einem der vorhergehenden Ansprüche, **dadurch gekennzeichnet, dass** er eine elastische Zunge (52) umfasst, die das elastische Element bildet und umfasst:

   - einen Befestigungsabschnitt (54), der am zweiten der zwei rotierenden Organe (32) befestigt ist, und
   - einen flexiblen Abschnitt (59), welcher verbiegbar ist, um ein elastisches Andrücken der Nockenbahn (58) an die Rolle (50) sicherzustellen, das der Rolle (50) ermöglicht, auf der Nockenbahn (58) zu rollen, wenn sich die zwei rotierenden Organe (26, 32) relativ zueinander beiderseits der Referenzposition drehen.

4. Schwingungsdämpfer (30) nach Anspruch 3, **dadurch gekennzeichnet, dass** der flexible Abschnitt (59) einen Verformungs-Zwischenabschnitt (59) umfasst, der den Befestigungsabschnitt (54) mit der Nockenbahn (58) verbindet.

5. Schwingungsdämpfer (30) nach Anspruch 4, **dadurch gekennzeichnet, dass** der Verformungs-Zwischenabschnitt (59) in einer zur Rotationsachse (100) senkrechten Ebene U-förmig ausgebildet ist.

6. Schwingungsdämpfer (30) nach Anspruch 4, **dadurch gekennzeichnet, dass** der flexible Abschnitt (59) in Umfangsrichtung um die Drehachse (100) gekrümmt ist, wobei er sich bis zu einem freien Ende erstreckt, das dazu eingerichtet ist, sich mit einer radialen Komponente zu bewegen, wenn sich die zwei rotierenden Organe (26, 32) relativ zueinander drehen.

7. Schwingungsdämpfer (30) nach einem der vorhergehenden Ansprüche, **dadurch gekennzeichnet, dass** die Nockenbahn (58) radial nach außen gewandt und der Rolle (50) zugewandt ist.

8. Schwingungsdämpfer (30) nach einem der vorhergehenden Ansprüche, **dadurch gekennzeichnet, dass** das elastische Element derart ausgebildet ist, dass es eine Bewegung der Nockenbahn (58) mit einer radialen Komponente ermöglicht, wenn sich die zwei rotierenden Organe (26, 32) relativ zueinander drehen.

9. Schwingungsdämpfer (30) nach einem der vorhergehenden Ansprüche, **dadurch gekennzeichnet, dass** die Rolle (50) eine Rolle ist, die sich um eine in Bezug auf das erste rotierende Organ (26) feste Drehachse (200) dreht.

10. Schwingungsdämpfer (30) nach einem der vorhergehenden Ansprüche, **dadurch gekennzeichnet, dass** ein Anschlag (66) die Winkelauslenkung zwischen den zwei rotierenden Organen (26, 32) begrenzt.

11. Schwingungsdämpfer (30) nach einem der vorhergehenden Ansprüche, **dadurch gekennzeichnet, dass** das oder die Verbindungsmodule so beschaffen sind, dass, wenn sich das zu dämpfende Organ mit einer Rotationsgeschwindigkeit $\omega$ dreht, das oder die Verbindungsmodule zusammen zwischen den zwei rotierenden Organen ein resultierendes Drehmoment $\Gamma_R$ zum Zurückstellen in die Referenzposition erzeugen, das von der Winkelauslenkung $\theta$ zwischen den zwei rotierenden Organen und von der Rotationsgeschwindigkeit $\omega$ abhängt und für das gilt:

$$\frac{3}{4}C \leq \left| \frac{\Gamma_R}{\theta \cdot \omega^2} \right| \leq \frac{5}{4}C \ ,$$

wobei C eine gegebene positive Konstante ist, wenn

die Rotationsgeschwindigkeit $\omega$ in einem Geschwindigkeitsbereich zwischen einem vorbestimmten minimalen Wert $\omega$min, der kleiner als 1000 U/min ist, und einem vorbestimmten maximalen Wert $\omega$max, der größer als 1500 U/min ist, variiert.

12. Schwingungsdämpfer (30) nach einem der Ansprüche 3 bis 6, **dadurch gekennzeichnet, dass** das Schwungrad (32) ein ringförmiges Blech (83) und einen Schwungkranz (65), der radial außen an diesem ringförmigen Blech (83) befestigt ist, umfasst, wobei die elastischen Zungen und das ringförmige Blech (83) des Schwungrades aus einem Stück hergestellt sind.

13. Dämpfungsmechanismus (22), welcher ein Eingangsorgan (14, 24) und ein Ausgangsorgan (26) umfasst, die durch eine kinematische Kette zur Drehmomentübertragung verbunden sind, **dadurch gekennzeichnet, dass** er einen Schwingungsdämpfer (30) nach einem der vorhergehenden Ansprüche umfasst, wobei das zu dämpfende Organ (26) aus dem Eingangsorgan (14, 24), dem Ausgangsorgan (26) oder einem Element der kinematischen Kette zur Übertragung zwischen dem Eingangsorgan (14, 24) und dem Ausgangsorgan (26) besteht, wobei das schwingende Schwungrad (32) in einem Nebenzweig in Bezug auf die kinematische Kette zur Drehmomentübertragung angeordnet ist.

14. Dämpfungsmechanismus nach dem vorhergehenden Anspruch, **dadurch gekennzeichnet, dass** das Eingangsorgan (14, 14) ein Primärschwungrad (24) eines Zweimassenschwungrades ist und das Ausgangsorgan (26) ein Sekundärschwungrad (26) eines Zweimassenschwungrades ist, wobei ein Lager (46) die Drehführung des Sekundärschwungrades (26) in Bezug auf das Primärschwungrad (24) sicherstellt.

15. Drehmomentwandler, welcher einen Schwingungsdämpfer nach einem der Ansprüche 1 bis 13 umfasst.

**Claims**

1. A vibration damper (30), of dynamic absorber type, provided with:

   - two rotating members (26, 32) guided rotationally around an axis of revolution (100), wherein one of the two rotating members (26, 32) is an inertial flywheel (32) oscillating around the axis of revolution (100) and the other of the two rotating members (26, 32) is a member to be damped (26), wherein the member to be damped (26) is arranged to be driven by a torque following a torque path between a driving member and a driven member, wherein the inertial flywheel is arranged to be connected kinematically to the torque path between the driving member and the driven member solely by way of the member to be damped; and

- one or more connecting modules (34) between the two rotating members (26, 32), permitting a relative angular displacement θ between the two rotating members (26, 32) around the axis of revolution (100) on the two sides of a reference relative angular position.

**characterized in that** each connecting module (34) is provided with:

- a roller (50) associated with a first of the two rotating members and
- a cam track (58) connected resiliently by a resilient element to a second of the two rotating members (32), wherein the resilient element is capable of being deformed to ensure resilient bracing of the cam track (58) against the roller (50), thus permitting the roller (50) to roll over the cam track (58) when the two rotating members (26, 32) are rotating relative to one another on the two sides of the reference position.

2. A vibration damper (30) according to claim 1, **characterized in that** the resilient element is arranged such that the stiffness of the resilient element increases when the speed of rotation of the vibration damper increases.

3. A vibration damper (30) according to any one of the preceding claims, **characterized in that** it is provided with a resilient blade (52) forming the resilient element and containing:

- a fixation portion (54) fixed on the second of the two rotating members (32), and
- a flexible portion (59) capable of flexing to ensure resilient bracing of the cam track (58) against the roller (50), thus permitting the roller (50) to roll over the cam track (58) when the two rotating members (26, 32) are rotating relative to one another on the two sides of the reference position.

4. A vibration damper (30) according to claim 3, **characterized in that** the flexible portion (59) is provided with an intermediate deformation portion (59) connecting the fixation portion (54) to the cam track (58).

5. A vibration damper (30) according to claim 4, **characterized in that** the intermediate deformation portion (59) is U-shaped in a plane perpendicular to the axis of revolution (100).

6. A vibration damper (30) according to claim 4, **characterized in that** the flexible portion (59) is circumferentially curved around the axis of rotation (100) extending up to a free end arranged to be displaced with a radial component when the two rotating members (26, 32) are rotating relative to one another.

7. A vibration damper (30) according to any one of the preceding claims, **characterized in that** the cam track (58) is turned radially toward the exterior and toward the roller (50).

8. A vibration damper (30) according to any one of the preceding claims, **characterized in that** the resilient element is arranged in such a way as to permit displacement of the cam track (58) having a radial component when the two rotating members (26, 32) are rotating relative to one another.

9. A vibration damper (30) according to any one of the preceding claims, **characterized in that** the roller (50) is a roller pivoting around an axis of rotation (200) fixed relative to the first rotating member (26).

10. A vibration damper (30) according to any one of the preceding claims, **characterized in that** a stop (66) limits the angular displacement between the two rotating members (26, 32).

11. A vibration damper (30) according to any one of the preceding claims, **characterized in that** the connecting module or modules are such that, when the member to be damped is rotating at a speed of revolution ω, the connecting module or modules generate together, between the two rotating members, a resultant torque $\Gamma_R$ of restoration toward the reference position, which is a function of the angular displacement θ between the two rotating members and of the speed of revolution ω, and such that:

$$\frac{3}{4}C \le \left|\frac{\Gamma_R}{\theta \cdot \omega^2}\right| \le \frac{5}{4}C$$

where C is a positive constant, given when the speed of revolution ω varies in a speed range between a predetermined minimal value ωmin below 1000 rpm and a predetermined maximal value ωmax higher than 1500 rpm.

12. A vibration damper (30) according to any one of the claims 3 to 6, wherein the inertial flywheel (32) comprises an annular steel sheet (83) and an inertia ring (65) fixed radially externally to this annular steel sheet (83), wherein the resilient blades and the annular steel (83) of the inertial flywheel sheet are formed in one piece.

13. A damping mechanism (22) provided with an input member (14, 24) and an output member (26) connected by a kinematic torque-transmission train, **characterized in that** it is provided with a vibration damper (30) according to any one of the preceding claims, wherein the member to be damped (26) is constituted by the input member (14, 24), the output member (26) or an element of the kinematic transmission train between the input member (14, 24) and the output member (26), wherein the oscillating flywheel (32) is disposed in branched manner relative to the kinematic torque-transmission train.

14. A damping mechanism (22) according to the preceding claim wherein the input member (14, 14) is a primary inertial flywheel (24) of a dual mass flywheel and the output member (26) is a secondary inertial flywheel (26) of a dual mass flywheel, a bearing (46) being provided to guide in rotation the secondary inertial flywheel (26) according to the primary inertial flywheel (24).

15. A torque converter comprising a vibration damper according to any one of claims 1 to 14.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

EP 3 368 789 B1

**Fig. 14**

**Fig. 15**

**Fig. 16**

EP 3 368 789 B1

**Fig. 17**

**Fig. 18**

**Fig. 19**

**Fig. 20**

**Fig. 21**

**EP 3 368 789 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2857073

- DE 102010049929